# EUROPÄISCHE PATENTANMELDUNG

(11) **EP 4 386 349 A1**
(43) Veröffentlichungstag der Anmeldung: **19.06.2024**
(21) Anmeldenummer: 23215549.9
(22) Anmeldetag: 11.12.2023
(51) Int. Cl.: G01M 5/00, F03D 17/00

(54) **PRÜFVORRICHTUNG FÜR ROTORBLÄTTER EINER WINDKRAFTANLAGE**

(30) Priorität: 12.12.2022 DE 102022133002
(71) Anmelder: CFM Schiller GmbH, 52159 Roetgen (DE)
(72) Erfinder: Bertel, Dirk, 52159 Roetgen (DE); Peters, Wolfgang, 52159 Roetgen (DE)
(74) Vertreter: Cohausz Hannig Borkowski Wißgott

(57) **Zusammenfassung**

Prüfvorrichtung für Rotorblätter einer Windkraftanlage umfassend ein Aufnahmeelement (1) mit einer Befestigungsfläche (1a), an dem ein Rotorblatt mit dessen Blattwurzel befestigbar ist, wobei das Aufnahmeelement (1) in der Prüfvorrichtung um wenigstens eine Drehachse (6, 8), vorzugsweise um zwei Drehachsen (6, 8) drehbar gelagert ist.

## Beschreibung

Die Erfindung betrifft eine Prüfvorrichtung für Rotorblätter einer Windkraftanlage umfassend ein Aufnahmeelement mit einer Befestigungsfläche, wobei an dem Aufnahmeelement bzw. an dessen Befestigungsfläche ein Rotorblatt mit dessen Blattwurzel befestigbar ist.

Solche Prüfvorrichtungen sind allgemein bekannt, z.B. aus der Publikation EP 3 730 916 A1. Sie dienen dazu ein Rotorblatt mit der Blattwurzel an dieser zu befestigen, so dass die Blattspitze oder andere Blattbereiche gegenüber der Blattwurzel durch Kraftbeaufschlagung ausgelenkt werden können. Es können so z.B. Ermüdungsprüfungen durchgeführt werden, da auf diese Weise übliche Windlasten an den Rotorblättern, die im Betrieb einer Windkraftanlage auftreten können, simuliert werden können.

Problematisch ist es bei solchen üblichen Prüfvorrichtungen, dass die Lage eines an dem Aufnahmeelement befestigen Rotorblattes nicht geändert werden kann, da das Aufnahmeelement bzw. dessen Befestigungsfläche im Raum ortsfest ist, z.B. wenn in üblicher Weise das Aufnahmeelement in einen Betonblock eingelassen ist oder der Betonblock das Aufnehmeelement und eine Befestigungsfläche bildet. In solchen Fällen muss für eine beabsichtigte Lageänderung das Rotorblatt zunächst vom Aufnahmeelement gelöst, in der Lage geändert und anschließend wieder an dem Aufnahmeelement befestigt werden, z.B. durch Verschrauben.

Es ist somit eine Aufgabe der Erfindung eine Prüfvorrichtung bereit zu stellen, welche es ermöglich, die Lage eines am Aufnahmeelement befestigten Rotorblatts zu ändern, vorzugsweise in mehreren Freiheitsgraden, ohne dass hierfür das Rotorblatt vom Aufnahmeelement gelöst werden muss.

Diese Aufgabe wird erfindungsgemäß dadurch gelöst, dass das Aufnahmeelement in der Prüfvorrichtung um wenigstens eine Drehachse, vorzugsweise um zwei Drehachsen, insbesondere unabhängig voneinander, drehbar gelagert ist. So kann ein an dem Aufnahmeelement befestigtes Rotorblatt bei einer einzigen realisierten Drehachse mit zumindest einem Freiheitsgrad, insbesondere einem rotatorischen Freiheitsgrad im Raum umpositioniert werden. Bei zwei realisierten, insbesondere zwei zueinander senkrechten Drehachsen kann das Rotorblatt in zwei Freiheitsgraden, insbesondere zwei rotatorischen Freiheitsgraden umpositioniert werden.

Es können so erfindungsgemäß nacheinander verschiedene Prüfungen an einem bei jeder Prüfung verschieden orientierten Rotorblatt vorgenommen werden, ohne dass das Rotorblatt zwischen den Prüfungen von dem Aufnahmeelement abmontiert werden muss.

Vorzugsweise ist es dabei vorgesehen, dass das Aufnahmeelement in einer möglichen Ausführung um eine parallel zum Normalenvektor der Befestigungsfläche liegende Drehachse drehbar gelagert ist. Vorzugsweise ist dabei die Drehachse parallel zur Längserstreckungsrichtung eines an der Befestigungsfläche befestigbaren/befestigten Rotorblattes. Weiter bevorzugt führt die Drehachse durch die geometrische Mitte des Aufnahmeelements.

So kann ein befestigtes Rotorblatt auf einfache Weise um seine Längsrichtung herum gedreht werden.

Eine andere bevorzugte Ausführung sieht es vor, dass das Aufnahmeelement um eine senkrecht zum Normalenvektor der Befestigungsfläche liegende Drehachse drehbar gelagert ist. Vorzugsweise ist dabei die Drehachse senkrecht zur Längserstreckungsrichtung eines an der Befestigungsfläche befestigbaren/befestigten Rotorblattes. Besonders bevorzugt ist diese Drehachse horizontal ausgerichtet oder zumindest parallel zu einem Bodenbereich, insbesondere einer Oberfläche eines Fundamentes, auf dem die Prüfvorrichtung angeordnet ist.

So können auf einfache Weise die Blattwurzel und die Blattspitze in verschiedenen Höhenniveaus positioniert werden. Dies ist besonders vorteilhaft, wenn die Auslenkung der Blattspitze gegenüber der Blattwurzel in Bereichen mit beschränkter Höhe durchgeführt werden soll.

Die beiden Arten der jeweiligen vorgenannten Lagerung können z.B. alternativ jeweils alleinig vorgesehen sein. Besonders bevorzugt ist es, an einer Prüfvorrichtung beide vorgenannten Arten der Lagerung des Aufnahmeelementes gleichzeitig vorzusehen, so dass in diesem Fall das Rotorblatt in zwei Freiheitsgraden im montierten Zustand bewegt werden kann. Die beiden realisierten Drehachsen sind dabei vorzugsweise senkrecht zueinander orientiert, wobei vorzugsweise eine der Drehachsen fest horizontal liegend ist oder zumindest parallel zu einem Bodenbereich, insbesondere einer Oberfläche eines Fundamentes liegt, auf dem die Prüfvorrichtung angeordnet ist.

Für eine bevorzugte konstruktive Umsetzung sieht es die Erfindung vor, dass die Prüfvorrichtung eine Lagerplatte aufweist, an der das Aufnahmeelement drehbar gelagert ist, vorzugsweise um eine Drehachse parallel zur Normalen auf die Befestigungsfläche. In diesem Fall ist zumindest ein Freiheitsgrad realisiert. Dieser Freiheitsgrad kann alleinig oder in Verbindung mit z.B. wenigstens einem weiteren Freiheitsgrad realisiert sein.

Besonders bevorzugt ist auch die Lagerplatte in der Prüfvorrichtung drehbar gelagert um eine weitere Drehachse, vorzugsweise um eine zur Normalen auf die Befestigungsfläche senkrecht, bevorzugt horizontale Drehachse oder eine zumindest parallel zu einem Bodenbereich, insbesondere einer Oberfläche eines Fundamentes liegende Drehachse, auf dem die Prüfvorrichtung angeordnet ist. In diesem Fall ist demnach das Aufnahmeelement zusammen mit der Lagerplatte um diese Drehachse bewegbar, vorzugsweise ist dabei gleichzeitig das Aufnahmeelement relativ zur Lagerplatte drehbar, wie zuvor erwähnt.

Vorzugsweise sieht es die Erfindung vor, dass die drehbare Lagerung zwischen Aufnahmeelement und Lagerplatte dadurch ausgebildet ist, dass das Aufnahmeelement als Kreisscheibe ausgebildet ist, die an ihrem radial außen liegenden Randbereich an mehreren in Umfangsrichtung um das kreisscheibenförmige Aufnahmeelement verteilt angeordneten Positionen mittels Lagereinheiten in axialer und radialer Richtung an der Lagerplatte gestützt ist. Das kreisscheibenförmige Aufnahmeelement ist somit vorzugsweise um eine durch den Kreisscheibenmittelpunkt und parallel zur Flächennormalen der Befestigungsfläche liegende Drehachse drehbar.

Weiter vorzugsweise gibt es axial stützende Lagereinheiten und dazu separate radial stützende Lagereinheiten. Axial und radial bezieht sich dabei auf die Drehachse, um die das Aufnahmeelement relativ zur Lagerplatte drehbar ist. Diese Lagereinheiten können an der Lagerplatte radial außen um das kreisscheibenförmige Aufnahmeelement herum angeordnet sein, insbesondere an der zum Aufnahmeelement weisenden Oberfläche der Lagerplatte befestigt sein, z.B. verschraubt sein. Das kreisscheibenförmige Aufnahmeelement stützt sich dann vorteilhaft jeweils an einem drehbaren Teil eines Lagers der jeweiligen Lagereinheit in axialer und/oder radialer Richtung ab.

Ein jeweiliges Lager kann vorzugsweise als Wälzlager ausgebildet sein, z.B. als Rollenlager, insbesondere Zylinder- oder Kegelrollenlager. Vorzugsweise kontaktiert der jeweils äußere Lagerkranz eines Wälzlagers oder eine daran befestigte Rolle eine axial oder radial orientierte Fläche des Aufnahmeelementes. Insbesondere ist dabei vorgesehen, dass die Lager der radial stützenden Lagereinheiten direkt auf der radial nach außen weisenden Umfangsfläche des kreisscheibenförmigen Aufnahmeelementes aufliegen. Vorzugsweise sind die Lagereinheiten jeweils relativ zum Aufnahmeelement und/oder der Lagerplatte justierbar. So kann z.B., insbeondere für eine bestimmte Lage des Aufnahmeelements, jeglicher Spalt zwischen dem Lager und der dem Lager zugeordneten Kontaktfläche am Aufnahmeelement eliminiert werden.

Neben der so erreichten Drehbarkeit des Aufnahmeelementes ist es vorzugsweise auch vorgesehen, dass das Aufnahmeelement an der Lagerplatte drehfest befestigbar ist, insbesondere mittels Schrauben verspannbar ist. So kann erzielt werden, dass die Drehlagerung, insbesondere die zwischen Aufnahmeelement und Lagerplatte ausgebildete Drehlagerung, nur genutzt wird, um das Rotorblatt in eine andere Orientierung zu überführen, die eigentlichen Prüfungen aber in einem Zustand vorgenommen werden, in dem das Aufnahmeelement drehfest mit der Lagerplatte verbunden, insbesondere durch Schrauben verspannt ist.

Besonders bevorzugt ist eine Weiterbildung, gemäß der das kreisscheibenförmige Aufnahmeelement auf der Seite der Befestigungsfläche am radial außen liegenden Randbereich, insbesondere nur am radial außen liegenden Randbereich in axialer Richtung an der Lagerplatte gestützt ist und auf der von der Befestigungsfläche abgewandten und zur Lagerplatte gewandten Rückseite über mehrere, vorzugsweise in einer Umfangsrichtung um die Drehachse verteilt angeordnete Lagereinheiten axial an der Lagerplatte gestützt ist. Hierdurch bleibt auf der Befestigungsfläche der Bereich radial innen von den Lagereinheiten vollkommen frei für die Montage der Rotorblattwurzel.

Die rückseitig angeordneten Lagereinheiten können dabei auf einem kleineren Radius um die Drehachse angeordnet sein als die axial wirkenden Lagereinheiten an der Seite der Befestigungsfläche.

Besonders bevorzugt ist eine Weiterbildung, bei der das kreisscheibenförmige Aufnahmeelement zwischen den in axialer Richtung stützenden Lagereinheiten an der Seite der Befestigungsfläche und den in axialer Richtung stützenden Lagereinheiten an der Rückseite über Aktoren mit einer axialen Kraft beaufschlagbar ist. Axial ist hier wieder in Bezug zur Drehachse zu verstehen, um die das Aufnahmeelement relativ zur Lagerplatte drehbar ist. Hierdurch können Kippmomente, die durch das angehängte Rotorblatt auf das Aufnahmeelement wirken, insbesondere welche die Drehachse kippen würden, kompensiert werden. Ebenso kann ein eventuelles Axialspiel in den Lagern der Lagereinheiten weggedrückt werden.

Z.B. kann vorgesehen sein, dass jede an der Rückseite des Aufnahmeelements angeordnete und in axialer Richtung stützende Lagereinheit einen Aktor, vorzugsweise einen hydraulisch betätigbaren Aktor umfasst, mit dem wenigstens ein Lager, insbesondere zwei parallel angeordnete Lager, insbesondere Wälzlager, innerhalb der Lagereinheit in axialer Richtung der Drehachse verschiebbar ist. So kann durch die Bewegung des wenigstens einen Lagers eine axiale Kraft auf den Ort ausgeübt werden, an den das Lager an dem Aufnahmeelement angreift.

Alternativ zur vorherigen Ausführung, aber auch kumulativ zu dieser ist es möglich, dass jede an der Seite der Befestigungsfläche des Aufnahmeelements angeordnete und in axialer Richtung stützende Lagereinheit einen Aktor, vorzugsweise einen hydraulisch betätigbaren Aktor umfasst, mit dem wenigstens ein Lager, insbesondere Wälzlager, innerhalb der Lagereinheit in axialer Richtung der Drehachse verschiebbar ist.

Eine Ausführung der Erfindung kann vorsehen, dass das Aufnahmeelement, insbesondere mittelbar über eine Lagerplatte in Verbindung mit einer der vorgenannten Ausführungen, an einer Stützvorrichtung befestigt ist, die an einer Basis der Prüfvorrichtung befestigt ist. Stützvorrichtung und Basis können hierbei drehfest verbunden sein, insbesondere wenn nur der Freiheitsgrad der Drehung zwischen Aufnahmeelement und Lagerplatte realisiert ist.

Vorzugsweise ist jedoch die Stützvorrichtung um eine Drehachse herum beweglich an der Basis gelagert, insbesondere eine Drehachse die senkrecht orientiert ist zur Normalen auf der Befestigungsfläche, vorzugsweise die horizontal ist oder zumindest parallel ist zu einer Oberfläche, z.B. Fundamentoberfläche, an der die Basis befestigt ist,.

Diese Art der konstruktiven Umsetzung eines Freiheitsgrades der Bewegung kann dabei alleinig, aber auch in Kombination mit den vorgenannten Ausführungen ausgebildet sein, insbesondere somit einen zusätzlichen zweiten Freiheitsgrad bilden.

Es kann dabei das Aufnahmeelement, insbesondere direkt, an der Stützvorrichtung oder die Lagerplatte, insbesondere direkt, an der Stützvorrichtung befestigt sein, wobei das Aufnahmeelement drehbar in der Lagerplatte gelagert ist, insbesondere als kreisscheibenförmige Platte, die um die Normale der Befestigungsfläche im Mittelpunkt der Kreisscheibe drehbar ist. In letzterem Fall ist sodann das Aufnahmeelement mittelbar über die Lagerplatte an der Stützvorrichtung befestigt.

Basis und Stützvorrichtung sind Teil der Prüfvorrichtung, wobei vorzugsweise die Basis einen im Raum (Erdbezugssystem) ortsfesten Teil der Prüfvorrichtung bildet, der z.B. mit einem Fundament im Boden verbunden ist. Die Stützvorrichtung ist demnach vorzugsweise an der Basis beweglich gelagert, alternativ aber auch ggfs. drehfest mit der Basis verbunden.

Es kann vorzugsweise vorgesehen sein, dass ein Fundament ein in einer Richtung, vorzugsweise in zwei Richtungen, insbesondere in zwei zueinander senkrechten Richtungen ausgebildetes Raster mit Befestigungsstellen aufweist, an denen die Basis befestigbar ist, z.B. durch Verschraubung. So kann die Basis auf dem Fundament im Abstand der Befestigungsstellen unterschiedlich positioniert werden.

Die Bewegung der Lagerplatte um ihre Drehachse, vorzugsweise horizontale Drehachse, erfolgt vorzugsweise mittels wenigstens eines, vorzugsweise hydraulischen, insbesondere linear wirkenden Aktors. Vorzugsweise sind wenigstens zwei solche Aktoren vorgesehen, die in Richtung dieser Drehachse beabstandet und parallel zueinander angeordnet sind. Vorzugsweise sind die Stellen an denen der jeweilige Aktor einerseits an der Stützvorrichtung und andererseits an der Basis angelenkt sind, in der möglichen Rotationsrichtung, insbesondere um die Drehachse herum beabstandet.

Auch die Bewegung des kreisscheibenförmigen Aufnahmeelementes relativ zur Lagerplatte kann in allen möglichen Ausführungen vorzugsweise mittels eines Aktors, z.B. hydraulischen Aktors erfolgen, insbesondere mittels eines rotatorisch wirkenden Aktors. Hierbei kann der Aktor zu einer Seite an der Lagerplatte oder der Stützvorrichtung befestigt sein und zur anderen Seite an dem Aufnahmeelement.

Bevorzugt ist es, dass die Stützvorrichtung mehrere mit Abstand parallel zueinander angeordnete und senkrecht zur Befestigungsfläche des Aufnahmeelementes und/oder senkrecht zur Lagerplatte orientierte Stützwände aufweist. Die Lagerplatte oder alternativ direkt das Aufnahmeelement ist vorzugsweise mit seiner von der Befestigungsfläche wegweisenden Rückseite an der Stützvorrichtung bzw. vorzugsweise an den jeweiligen Stützwänden befestigt.

Vorzugsweise sind dabei benachbarte Stützwände miteinander über Verbindungsstreben verbunden sind.

Eine solche Ausführung kann sowohl bei der nicht rotierbaren Anordnung der Stützvorrichtung an der Basis als auch bei einer rotierbaren Anordnung der Stützvorrichtung an der Basis vorgesehen sein und erschließt vorzugsweise durch die Beabstandung zwischen den Stützwänden, dass von der Befestigungsfläche abgewandte Bereiche des Aufnahmeelementes und/oder der Lagerplatte zwischen benachbarten Stützwänden zugänglich sind.

In solchen Abstandsbereichen können z.B. die axial wirkenden Lagereinheiten angeordnet sein, die an der Lagerplatte befestigt sind und / oder lineare Aktoren können mit ihrer zur Stützvorrichtung weisenden Anlenkstelle zwischen benachbarten Stützwänden mit der Stützvorrichtung verbunden sein, um die Stützvorrichtung rotatorisch relativ zur Basis zu bewegen. Bei der rotatorischen Bewegung der Stützvorrichtung relativ zur Basis ist vorzugsweise vorgesehen, dass die Stützvorrichtung um die ausgebildete Drehachse herum relativ zur Basis verschoben wird, insbesondere also an der Basis um die Drehachse herum verschiebbar gelagert ist.

Vorzugsweise wird eine drehbeweglich / verschieblich gelagerte Stützvorrichtung mit wenigstes zwei linear wirkenden Aktoren bewegt, die in der Richtung der Drehachse beabstandet und parallel zueinander sind.

In allen möglichen Ausführungen ist es bevorzugt vorgesehen, dass jede Stützwand aus mehreren Stützsäulen ausgebildet ist, insbesondere die untereinander, vorzugsweise über Flanschplatten, verbunden sind, vorzugsweise wobei die von dem Aufnahmeelement am weitesten beabstandeten Stützsäulen von oben nach unten im Querschnitt zunehmend ausgebildet sind. So kann die Anzahl der Stützsäulen in einer jeweiligen Stützwand gemäß den statischen Anforderungen gewählt werden.

Die Unterteilung der Stützvorrichtung in mehrere Stützwände und bevorzugt die weitere Unterteilung der Stützwände in Stützsäulen bietet den Vorteil, dass die Stützvorrichtung für einen Transport in leichter handhabbare Teile zerlegt werden kann.

In einer bevorzugten Ausführung ist die Stützvorrichtung mittels wenigstens eines Schlittens, vorzugsweise mittels mehreren Schlitten, auf/an wenigstens einem Schienenelement der Basis um die Drehachse herum verschieblich, insbesondere wobei das wenigstens eine Schienenelement wenigstens eine kreisbogenförmig um eine Drehachse gekrümmte Führungsschiene aufweist, insbesondere wobei die Drehachse senkrecht orientiert ist zur Normalen auf der Befestigungsfläche, vorzugsweise horizontal ist.

Besonders bevorzugt ist es, dass die Drehachse in einem Abstand unter dem Schienenelement liegt, insbesondere unter der Oberfläche der Basis liegt, insbesondere in oder unter dem die Basis bildenden Fundament liegt, weiter bevorzugt die Stützvorrichtung mit einem Radius um die Drehachse herum verschiebbar ist, der mehrere Meter beträgt, insbesondere wobei der Radius zwischen 10 Metern und 30 Metern, vorzugsweise zwischen 15 Metern und 25 Metern liegt. Durch diese vom Schienenelement beabstandete Anordnung der Drehachse wird eine besonders hohe Steifigkeit der Lagerung der Stützvorrichtung an der Basis erzielt.

Vorzugsweise ist vorgesehen, dass nicht nur die wenigstens eine Führungsschiene gekrümmt ist, vorzugsweise jeweils zwei Führungsschienen eines Schienenelementes gekrümmt sind, sondern dass für die Führung und/oder Fixierung eines Schlittens an einem Schienenelement relevante Flächenbereiche, wie z.B. Flächen über die eine kraft- und/oder reib- und/oder formschlüssige Befestigung zwischen Schlitten und Schienenelement erfolgt und/oder Laufflächen der wenigstens einen Führungsschiene, auf/an denen Rollen der Schlitten laufen, eine Krümmung um die Drehachse aufweisen oder zumindest einer Krümmung um die Drehachse folgen.

Insbesondere entspricht die Krümmung eines gekrümmten Elementes / Bereiches des Schienenelements dem radialen Abstand des gekrümmten Elementes / Bereiches von der Drehachse.

Weiterhin ist vorzugsweise bei einer drehbeweglich / verschieblich gelagerten Stützvorrichtung vorgesehen, dass jede Stützwand an deren unteren Ende mit einem eigenen Schlitten auf/an einem eigenen Schienenelement verschieblich ist.

Alle Schlitten sind vorzugsweise in derselben Richtung auf parallel zueinander angeordneten Schienenelementen verschieblich.

Bei der drehbeweglichen Lagerung der Stützvorrichtung an der Basis ist vorzugsweise vorgesehen, dass jedes Schienenelement einen Schienenkörper aufweist, der auf zwei sich gegenüberliegenden Seiten jeweils eine um die Drehachse gekrümmte Führungsschiene aufweist, vorzugsweise wobei jede Führungsschiene zwei in radialer Richtung zur Drehachse beabstandete gekrümmte Laufflächen aufweist, zwischen denen jeweils Laufrollen der Schlitten geführt sind. Die gegenüberliegenden Seiten bzw. die sich gegenüberliegenden Führungsschienen sind in Richtung der Drehachse zueinander beabstandet, um welche die Stützvorrichtung relativ zur Basis bewegbar / verschiebbar ist. Die gekrümmten Laufflächen einer jeweiligen Führungsschiene sind dabei jeweils mit dem Radius ihrer Beabstandung von der Drehachse gekrümmt.

Vorzugsweise weist jeder Schlitten jeweils an dessen in Verschieberichtung vorderen und hinteren Ende zwei sich gegenüberliegende, über die zum Schlitten weisende, vorzugsweise gekrümmte, Oberfläche des Schienenelementes hinausragende Laufrolleneinheiten auf, wobei jede Laufrolleneinheit wenigstens zwei Laufrollen aufweist.

Solche wenigstens zwei Laufrollen liegen vorzugsweise jeweils zwischen zwei gekrümmten Laufflächen einer Führungsschiene des Schienenelementes ein, vorzugsweise wobei wenigstens zwei Laufrollen unterschiedlichen radialen Abstand zur Drehachse aufweisen, insbesondere wenigstens eine der Laufrollen in radialer Richtung zur Drehachse justierbar ist.

Vorzugsweise ist der radiale Abstand zwischen den sich radial gegenüberliegenden Laufflächen größer als der Durchmesser jeder Laufrolle, so dass durch den unterschiedlichen radialen Abstand der Laufrollen zur Drehachse erzielbar ist, dass eine der Laufrollen die untere Lauffläche kontaktiert und zur oberen anlagefrei ist und die andere der Laufrollen die obere Lauffläche kontaktiert und zur unteren anlagefrei ist.

Insbesondere um eine drehfeste Befestigung zwischen Stützvorrichtung und Basis zu erzielen, die vorzugsweise vorgenommen wird, um Prüfungen durchzuführen, sieht es die Erfindung in bevorzugter Konstruktion vor, dass die zum Schlitten weisende Oberfläche, vorzugsweise gekrümmte Oberfläche des Schienenkörpers eines Schienenelementes mehrere in der Verschieberichtung nebeneinanderliegende Spannsegmente aufweist, insbesondere die in ihrer Nebeneinanderanordnung der Krümmung um die Drehachse folgen, wobei am Schlitten Spannblöcke vorgesehen sind und ein jeweiliger Spannblock mit einem Spannsegment form- und/oder kraftschlüssig und/oder reibschlüssig verbindbar ist.

Solche Spannsegmente können an ihrer zum Schlitten weisenden Oberfläche vorzugsweise plan ausgebildet sein und bilden somit in der Nebeneinanderanordnung aller Spannsegmente eine um die Drehachse herumgeführte ("gekrümmte") und abschnittsweise plane Oberfläche.

Die Spannsegmente können vorzugsweise auf der zum Schlitten weisenden Rückseite der oberen Lauffläche der wenigstens einen Führungsschiene befestigt sein, insbesondere wobei diese Rückseite eine zum Schlitten weisende gekrümmte Oberfläche eines jeweiligen Schienenelementes bzw. von dessen Schienenkörper bildet.

Die genannten Spannblöcke können unterschiedlich ausgeführt sein, um eine form- und/oder kraftschlüssige und/oder reibschlüssige Verbindung mit einem Spannsegment auszubilden.

Bevorzugt umfassen die Spannblöcke erste Spannblöcke, wobei ein jeweiliger erster Spannblock in radialer Richtung in seiner Dicke variabel einstellbar ist. Z.B. kann dies vorzugsweise ermöglicht sein durch senkrecht zur radialen Richtung relativ zueinander verschiebbare und in radialer Richtung übereinander liegende Keilplatten. Insbesondere ist hierfür zumindest eine von mehreren Keilplatten in einem solchen Spannblock bewegbar, z.B. mittels einer Antriebsspindel. Weiter vorzugsweise ist ein jeweiliger erster Spannblock in radialer Richtung von einer Spannschraube durchdrungen oder ist zumindest durchdringbar, die in ein Spannsegment einschraubbar ist.

Die genannte radiale Richtung ist hierbei in Bezug zur Drehachse unter dem Schienenelement / der Basis zu verstehen.

Innerhalb eines solchen ersten Spannblocks kann eine Federanordnung vorgesehen sein, um den Spannblock in Richtung kleiner werdender Dicke mit einer Kraft zu beaufschlagen, insbesondere so dass ein solcher Spannblock seine Dicke automatisch reduziert wenn eine Keilplatte aus dem Spannblock herausbewegt wird. Insbesondere ist die Dicke hier in radialer Richtung betrachtet.

Durch die Keilplattenverschiebung kann die Dicke des ersten Spannblocks so eingestellt werden, dass ein evtl. Spalt zwischen dem ersten Spannblock und der Oberfläche einer gegenüberliegenden Segmentplatte eliminiert ist, insbesondere was eine formschlüssige Verbindung zwischen Schlitten und Schienenelement über den ersten Spannblock erzielt. Durch das Verschrauben durch den ersten Spannblock hindurch kann weiterhin eine reib- und/oder kraftschlüssige Verbindung zwischen Schlitten und Schienenelement erzielt werden.

Bevorzugt umfassen die Spannblöcke zweite Spannblöcke, wobei die zweiten Spannblöcke mit den Spannsegmenten zusammenwirkend sind und zweite Spannblöcke und die Spannsegmente jeweils Aktoren, vorzugsweise hydraulische Aktoren umfassen, mit denen ein in einen zweiten Spannblock und in eine gegenüberliegende Spannsegment eingesetzter Passstift, vorzugsweise mit sich gegenüberliegenden planen Passflächen, formschlüssig klemmbar ist.

Hierfür können die Aktoren von zweitem Spannblock und Spannsegement jeweils sich gegenüberliegende hydraulisch betätigbare Kolben aufweisen, die senkrecht zur radialen Richtung bzgl. der Drehachse unter dem Schienenelement aufeinander zu und voneinander weg bewegbar sind, insbesondere zumindest im Wesentlichen in der Verschieberichtung bewegbar sind.

Die genannten ersten und zweiten Spannblöcke können am Schlitten alternativ, vorzugsweise aber beide gleichzeitig angeordnet sein. Vorzugsweise sind dabei erste und zweite Spannblöcke in der Verschieberichtung abwechselnd am Schlitten hintereinander angeordnet sind. Die Spannblöcke erster und/oder zweiter Art sind bevorzugt an einer Montageplatte eines Schlittens befestigt und in Richtung zum Schienenelement von dieser Montageplatte vorstehend. Die Montageplatte ist vorzugsweise um die Drehachse herum gekrümmt, um die herum die Stützvorrichtung relativ zur Basis verschiebbar ist.

Durch eine Verspannung von Spannsegmenten und ersten und/oder zweiten Spannblöcken gegeneinander, kann die zuvor genannte, gewünschte drehfeste Befestigung der Stützvorrichtung und der Basis bewirkt werden.

Ein Ausführungsbeispiel wird anhand der Figuren erläutert.

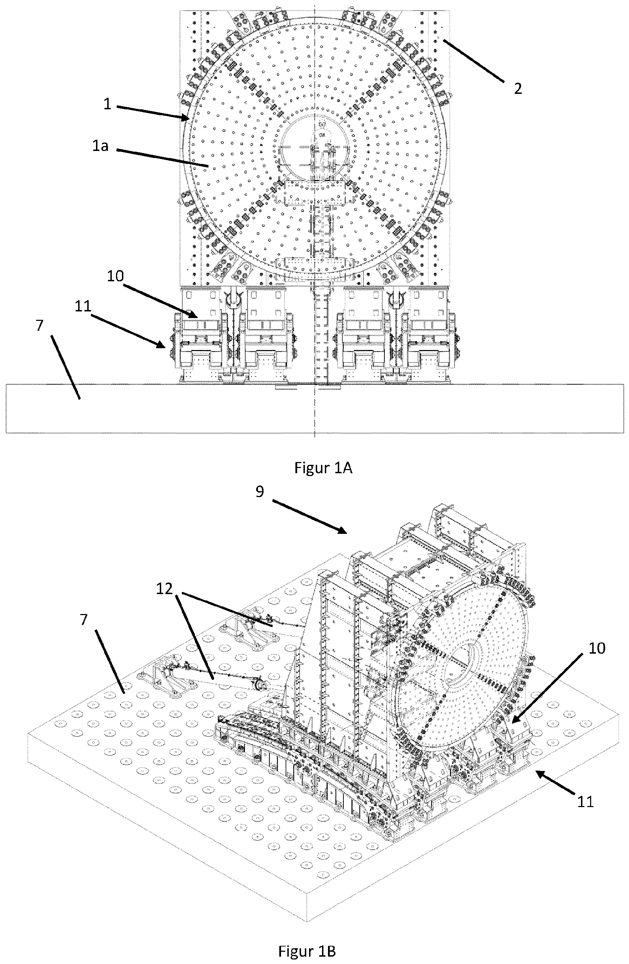

Die Figuren 1A bis 1E zeigen in verschiedenen Ansichten eine jeweilige Gesamtansicht der Prüfvorrichtung gemäß der Erfindung, die anhand der die Details zeigenden weiteren Figuren näher erläutert wird.

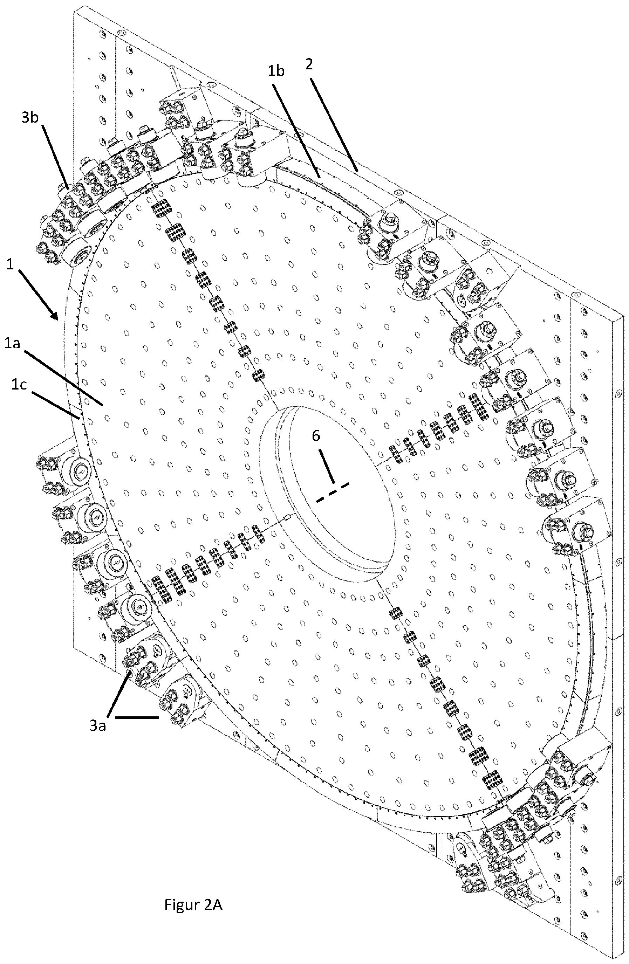

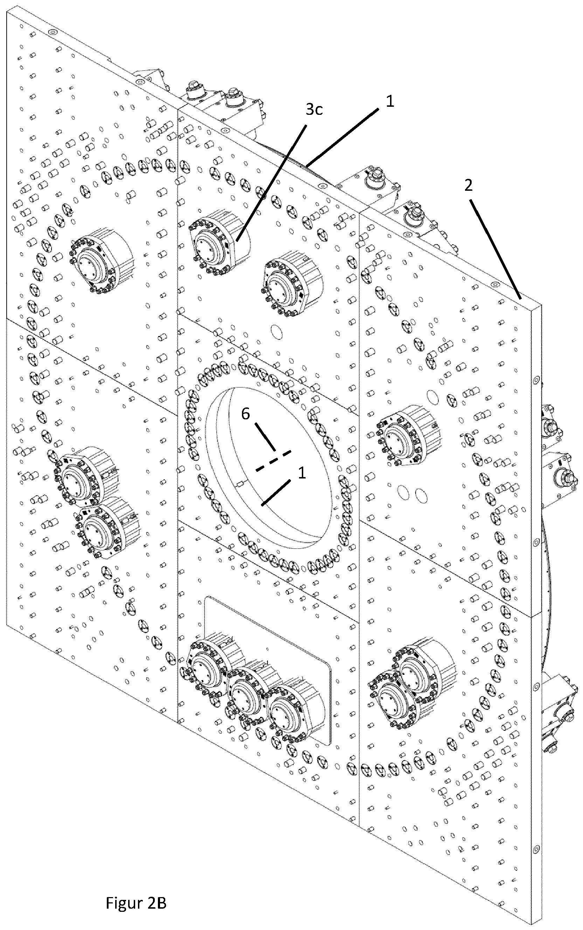

Die Figuren 2A und 2B zeigen im Detail ein hier kreisscheibenförmig ausgebildetes Aufnahmeelement 1 der Prüfvorrichtung mit einer Befestigungsfläche 1a, an der ein hier nicht gezeigtes Rotorblatt mit seiner Blattwurzel befestigt werden kann, z.B. durch Verschraubung. Das Aufnahmeelement weist z.B. eine Vielzahl von Gewindebohrungen oder Durchgangsbohrungen auf, die zur Befestigung eines Rotorblattes genutzt werden können. Das kreisscheibenförmige Aufnahmeelement 1 ist hier an einer Lagerplatte 2 drehbar befestigt.

Hierfür sind radial außen von dem Aufnahmeelement 1 an der Lagerplatte 2 mehrere Lagereinheiten befestigt, wobei diese Lagereinheiten solche Lagereinheiten 3a umfassen, die das Aufnahmeelement 1 in radialer Richtung stützen und solche Lagereinheiten 3b umfassen, die das Aufnahmeelement 1 in axialer Richtung stützen. Jede Lagereinheit 3a, 3b umfasst wenigstens eine Rolle, die bei den radial stützenden Lagereinheiten 3a direkt die nach radial außen weisende Umfangsfläche 1b des Aufnahmeelements 1 kontaktieren und bei den axial stützenden Lagereinheiten 3b eine auf der Befestigungsfläche 1a radial außen liegende axial ausgerichtete ringförmige Randfläche 1c des Aufnahmeelements 1 kontaktieren.

In der Lagerplatte 2 sind weitere axial stützende Lagereinheiten 3c befestigt, welche die Rückseite des Aufnahmeelementes 1 stützen, die von der Befestigungsfläche 1a abgewandt ist.

Das kreisscheibenförmige Aufnahmeelement 1 ist durch diese Lagereinheiten 3a, 3b, 3c um die Drehachse 6 relativ zur Lagerplatte 2 und damit in der Prüfvorrichtung drehbar. Die Angaben axial und radial beziehen sich bzgl. der Lagereinheiten 3a,b,c auf die Drehachse 6.

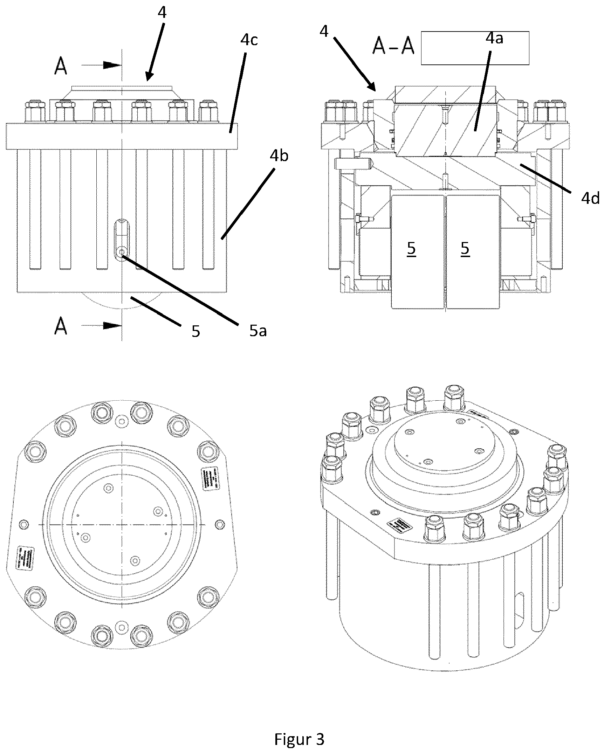

Diese Lagereinheiten 3c sind in der Figur 3 im Detail dargestellt. Sie weisen die Besonderheit auf, dass jede solche Lagereinheit 3c einen vorzugsweise hydraulischen Aktor 4 umfasst, insbesondere der als Zylinder-Kolben-Aggregat ausgebildet ist, mit dem das wenigstens eine Lager 5 (hier zwei), insbesondere der Laufrollen bildende äußere Kranz eines Wälzlagers 5 oder am äußeren Kranz eines Wälzlager 5 befestigte Laufrollen in axialer Richtung bewegbar sind. Hierfür weist der Aktor 4 in der Lagereinheit 3c einen in einem Kolbenraum hydraulisch bewegbaren Kolben 4a auf, mit dem eine Lagerwelle 5a axial verschiebbar ist, auf dem das wenigstens eine Lager 5 positioniert ist.

Die Anordnung aus Lagern 5, Lagerelle 5a, deren mit dem Kolben 4a in Verbindung stehender Halterung 4d und Aktor 4 kann in einer Hülse 4b angeordnet sein, die von einer Basisplatte 4c aus erstreckt ist und mit der Basisplatte 4c an der Lagerplatte 2 über Schraubbolzen befestigbar ist, insbesondere auf der von dem Aufnahmeelement 1 abgewandten Rückseite der Lagerplatte 2.

Das jeweilige Lager 5 bzw. dessen äußerer Kranz oder darauf befestigte Laufrollen wirken durch die Dicke der Lagerplatte 2 hindurch und kontaktieren die Rückseite des Aufnahmeelementes 1. Durch axiale Verschiebung der Lager 5 in einer Lagereinheit 3c kann das Aufnahmeelement 1 zwischen den axial wirkenden Lagereinheiten 3b und 3c mit einer axialen Kraft beaufschlagt werden und so im Wesentlichen spielfrei und ohne Verkippung der Drehachse 6 um diese herum gedreht werden.

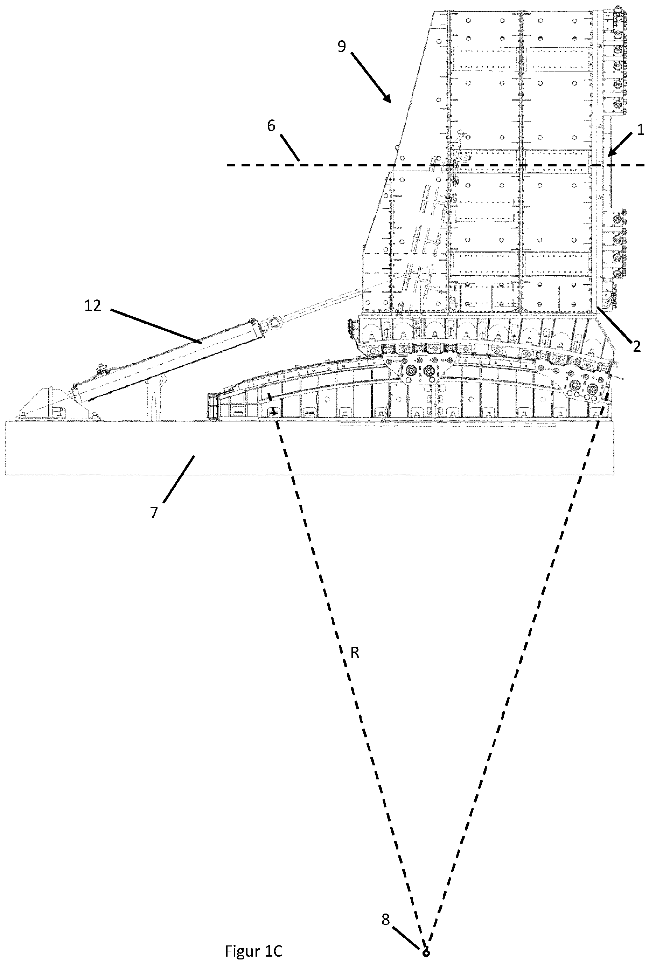

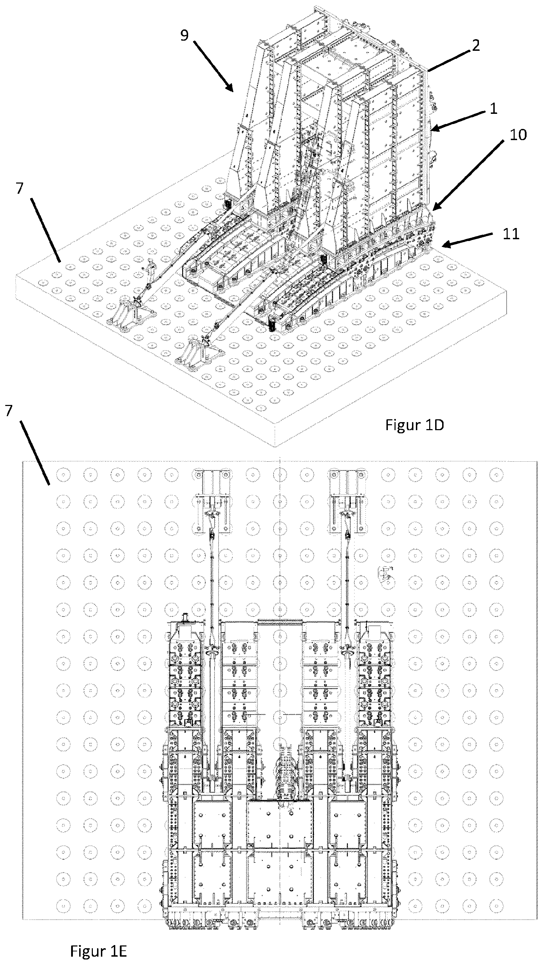

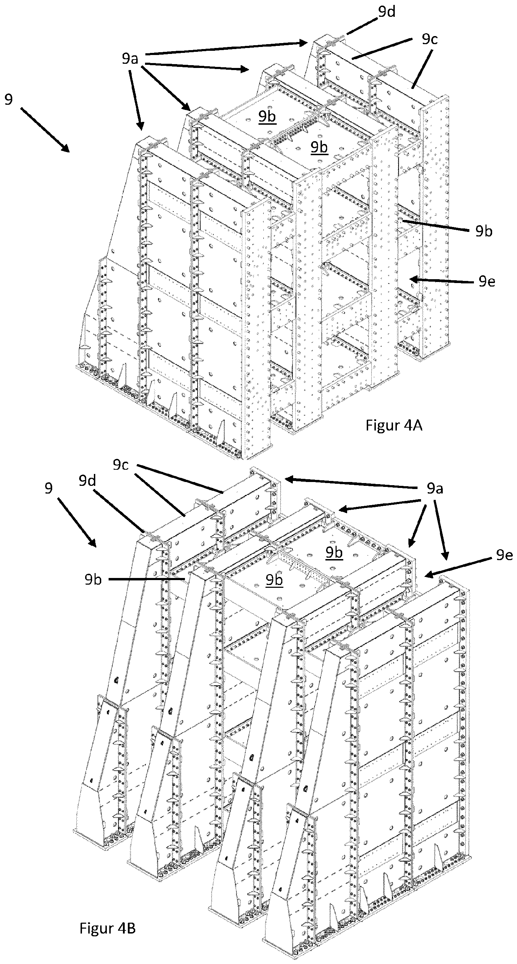

Die Figuren 4 zeigen in verschiedenen Ansichten eine Stützvorrichtung 9, über welche die Lagerplatte 2 mit der Basis 7 verbunden ist, wobei in der in den Figuren 1 gezeigten Ausführung die Stützvorrichtung 9 relativ zur Basis 7 um die unter der Basis 7 liegende Drehachse 8 drehbar gelagert ist. Die Drehachse 8 liegt bevorzugt horizontal und senkrecht zur Drehachse 6. Die Drehachse 8 liegt mehrere Meter unter der Oberfläche der Basis 7 im Erdreich oder noch im Fundament, welches die Basis bilden kann. Der Radius R kann vorzugsweise im Bereich von 10 bis 25 Metern liegen.

Die Stützvorrichtung 9 umfasst mehrere parallel mit Abstand zueinander angeordnete Stützwände 9a, die über den Abstand hinweg mit Streben 9b verbunden sind. Jede Stützwand 9a ist aus mehreren Stützsäulen 9c ausgebildet, die untereinander und vorzugsweise auch mit der Lagerplatte 2 durch Flanschplatten 9d verbunden sind. Die beiden am weitesten von der Lagerplatte 2 wegliegenden Stützsäulen 9c verjüngen sich nach oben im Querschnitt, so dass die Stützwand 9a an ihrem von der Lagerplatte 2 wegweisenden Ende eine zur Lagerplatte 2 nicht parallele / schräge Stützwandfläche aufweist.

Zwischen den Stützwänden 9a ergeben sich freie Raumbereiche 9e durch die Elemente in der Lagerplatte 2 zugänglich sind.

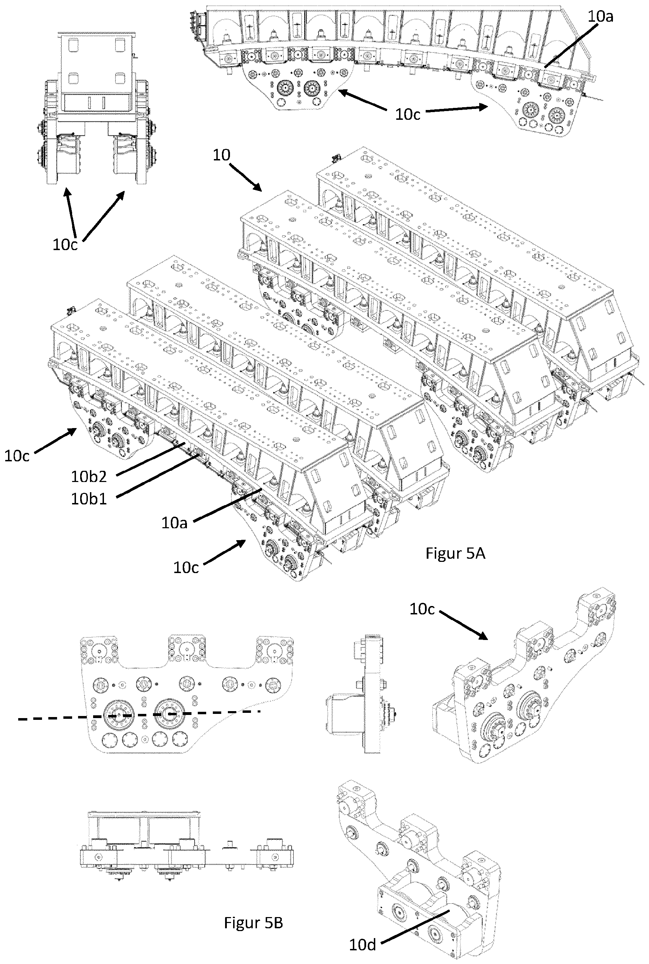

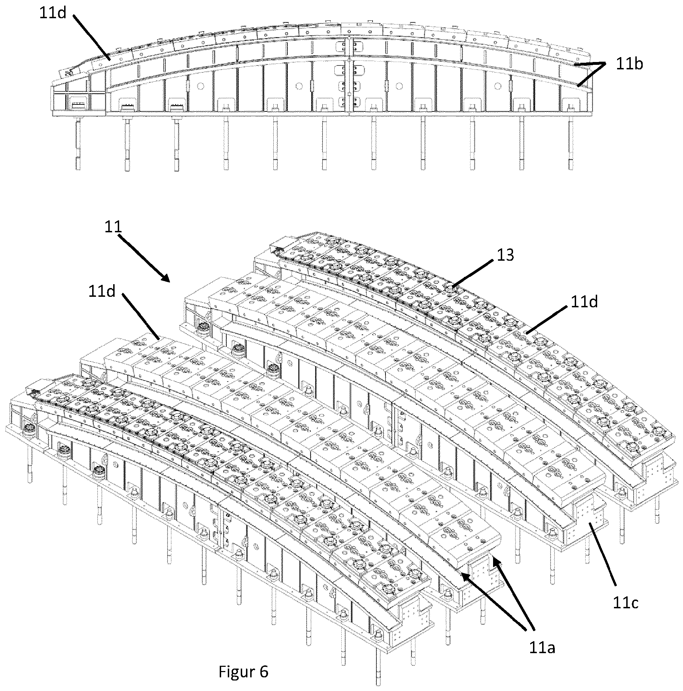

Jede Stützwand 9a weist an ihrem unteren Ende einen eigenen Schlitten 10 auf, der in den Figuren 5 gezeigt ist. Der jeweilige Schlitten 10 läuft auf um die Drehachse 8 gekrümmt ausgebildeten Schienenelementen 11, die in Figur 6 gezeigt sind. Die Summe der Schienenelemente 11 bilden eine Verbindung zur Basis 7 der Prüfvorrichtung, die z.B. durch ein Betonfundament ausgebildet sein kann.

Jeder Schlitten 10 weist hier eine vorzugsweise plane Oberfläche auf, mit der er an einer Stützwand 9a befestigbar ist. Er weist weiterhin eine gekrümmte Montagefläche 10a auf, an der erste und zweite Spannblöcke 10b1 und 10b2 befestigt sind. Beidseits eines Schlittens 10 beabstandet in der Richtung der Drehachse 8 sind am in Laufrichtung vorderen und hinteren Ende je zwei sich gegenüberliegende, insbesondere spiegelbildlich ausgebildete Laufrolleneinheiten 10c befestigt. Jede Laufrolleneinheit 10c ragt in Richtung zu einem Schienenelement 11 über dessen Oberfläche hinaus und trägt Laufrollen 10d, die in Richtung der Drehachse 8 orientierte Wellen aufweisen und zwischen je zwei gekrümmten Laufflächen 11b von zwei Führungsschienen 11a auf zwei sich gegenüberliegenden Seiten des Schienenkörper 11c des Schienenelements 11 einliegen. Die Schienenelemente 11 sind hier an der Basis 7 befestigt, z.B. über Bolzen.

Die Figur 5B verdeutlicht hierbei durch die gestrichelte Linie, dass die Wellen der Laufrollen 10d unterschiedlichen radialen Abstand zur Drehachse 8 haben, so dass jede der Laufrollen 10d an nur einer der beiden Laufflächen 11b anliegt. Vorzugsweise ist der radiale Abstand zur Drehachse 8 bei zumindest einer der beiden Rollen 10d einer Laufrolleneinheit 10c justierbar.

Durch die Verbindung von Schlitten 10 und Schienenelement 11 über die Laufrollen 10d zwischen den gekrümmten Laufflächen 11b ist die Stützvorrichtung 9 relativ zur ortsfesten Basis 7 um die Drehachse 8 herum verschiebbar, hier mit den beiden Linearaktoren 12, die in der Figur 1 erkennbar sind und zwischen Basis 7 und Stützvorrichtung 9 wirken.

Die Figur 6 zeigt, dass auf der zum Schlitten 10 weisenden gekrümmten Oberfläche eines Schienenkörpers des Schienenelementes 11, insbesondere die der Rückseite der oberen gekrümmten Lauffläche 11b entspricht, Spannsegmente 11c befestigt sind, die in ihrer Nebeneinanderanordnung in der Verschieberichtung der Krümmung der Oberfläche des Schienenkörpers 11c segmentweise folgen und selbst jeweils eine plane Oberfläche haben.

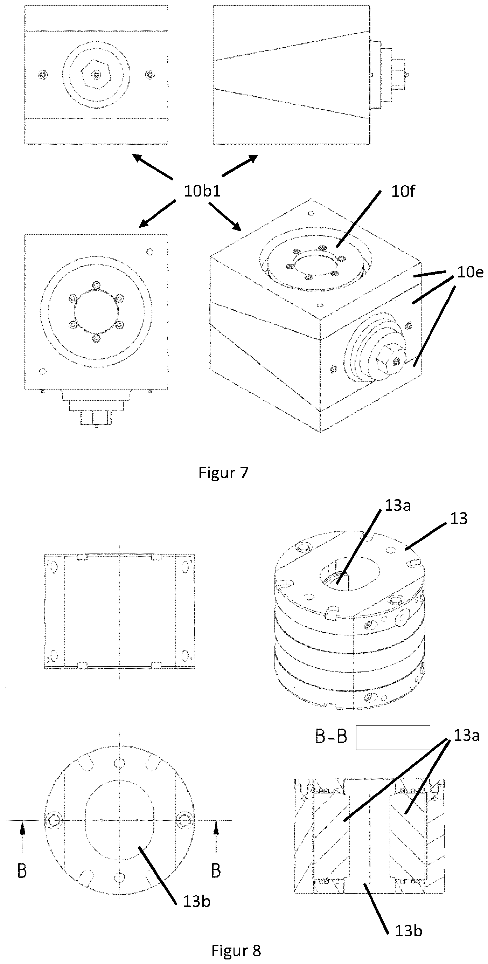

Es können passive und aktive Spannsegmente 11d vorgesehen sein, wobei die passiven lediglich Gewindebohrungen aufweisen, um mit Bolzen am Schlitten 10 verbunden zu werden, wobei die aktiven zusätzlich zu den Gewindebohrungen auch hydraulisch betätigbare Spannelemente 13 aufweisen, die in der Figur 8 gezeigt sind.

Diese Spannsegmente 11d wirken mit den Spannblöcken 10b1 und/oder 10b2 eines Schlittens 10 zusammen, insbesondere in der Weise, dass die Spannblöcke 10b1 mit den Spannsegmenten 11b verschraubt werden können, um die Stützvorrichtung 9 drehfest an der Basis 7 zu befestigen und über die Spannblöcke 10b2 eine Formschlußverbindung zwischen Schlitten und Schienenelement 11 erstellt wird. Die Spannblöcke 10b2 weisen in sich Spannelemente 13 auf, die identisch sein können zu den Spannelementen 13 der Spannplatten11d

In der Figur 7 sind die Spannblöcke 10b1 und in der Figur 8 die Spannelemente 13 der Spannplatten 11d und der Spannblöcke 10b2 im Detail dargestellt.

Die Spannblöcke 10b1 Sie weisen in radialer Richtung übereinander angeordnete Keilplatten 10e auf, mit denen durch Verschiebung einer Keilplatte 10e, insbesondere hier der mittleren, die radiale Dicke des Spannblocks 10b1 verstellt werden kann, insbesondere so, dass sich ein Spannblock 10b1 spaltlos auf einem Spannsegment 11c abstützt. In radialer Richtung ist der Spannblock 10b1 vorzugsweise von einer Tellerfederanordnung 10f durchsetzt. Die Tellerfederanordnung 10f weist z.B. eine Hülse mit an beiden Enden vorgesehenen Kragen auf, vor denen Tellerfedern liegen, die sich jeweils an den äußeren Keilplatten abstützen. Durch die Tellerfederanordnung werden die Spannblöcke 10b1 mit einer die radiale Dicke verkleinernden Kraft beaufschlagt, so dass sich die Spannblöcke 10b1 automatisch radial verkleinern können, wenn die mittlere Keilplatte10e aus dem Keilplattenblock herausbewegt wird.

Die Spannblöcke 10b1 bzw. vorzugsweise deren Tellerfederanordnung weisen einen Durchgang auf, so dass Spannschrauben / -bolzen durch diese hindurchgeführt werden können, um den Schlitten 10 mittels dieser Spannschrauben an den Schienenelementen, genauer an deren Spannplatten zu befestigen. So kann eine kraft- und oder reibschlüssige Verbindung erstellt werden.

Die Spannblöcke 10b2, bzw. die darin und in den Spannplatten 11d angeordneten Spannelemente 13, welche Figur 8 zeigt, weisen jeweils einen Aktor, vorzugsweise hydraulischen Aktor auf, der zwei sich gegenüberliegende Kolben 13a umfasst. Die Spannblöcke 10b2 und die Spannplatten 11d werden so gegegnüberliegend positioniert, dass die Durchgänge 13b der beiden sich dann gegenüberliegenden Spannelemente 13 zueinander fluchten, so dass ein Passstift druch beiden Spannelemente 13 hindurchgesteckt werden kann. Dieser Passstift kann sodann mit den Kolben 13a klemmend gegriffen werden, wofür der Passstift vorzugsweise sich gegenüberliegende plane Flächen aufweist, welche vom in inneren des Spannelementes weisenden Kolbenboden des Kolben 13a kontaktiert werden. So werden die Passstifte formschlüssig umschlossen.

Es kann daher mit den Spannblöcke 10b2 in Verbindungmit den Spannplatten 11d eine formschlüssige Verbindung mit mit den Spannblöcken 10b1 und den Spannplatten 11d eine kraft- und/oder reibschlüssige Verbindung von Schlitten und Schienenelement hergestellt werden. Bei einer solchen bestehenden Verbindung können Prüfungen an einem Rotorblatt vorgenommen werden.

Alle gekrümmten Elemente und Bereiche oder Oberflächen an den Schienenelementen 11, insbesondere auch die Montagefläche 10a eines Schlittens 10 sind mit einen Radius gekrümmt, welcher dem Abstand des betreffenden Elementes / Bereiches oder Oberfläche von der Drehachse 8 entspricht. Die Spannplatten 11d folgen der Krümmung der Oberfläche des Schienenkörpers 11c an der sie befestigt sind und bilden eine abschnittsweise plane um die Drehachse 8 gekrümmten Befestigungsfläche, die mit der planen Unterfläche der jeweiligen Spannblöcke 10b1 und/oder 10b2 zusammenwirkt.

## Patentansprüche

1. Prüfvorrichtung für Rotorblätter einer Windkraftanlage umfassend ein Aufnahmeelement (1) mit einer Befestigungsfläche (1a), an dem ein Rotorblatt mit dessen Blattwurzel befestigbar ist, **dadurch gekennzeichnet, dass** das Aufnahmeelement (1) in der Prüfvorrichtung um wenigstens eine Drehachse (6, 8), vorzugsweise um zwei Drehachsen (6, 8) drehbar gelagert ist.

2. Prüfvorrichtung nach Anspruch 1, **dadurch gekennzeichnet, dass** das Aufnahmeelement (1)
a. um eine parallel zum Normalenvektor der Befestigungsfläche (1a) liegende Drehachse (6) drehbar gelagert ist, vorzugsweise wobei die Drehachse (6) parallel ist zur Längserstreckungsrichtung eines an der Befestigungsfläche (1a) befestigbaren/befestigten Rotorblattes und/oder
b. um eine senkrecht zum Normalenvektor der Befestigungsfläche (1a) liegende Drehachse (8) drehbar gelagert ist, vorzugsweise wobei die Drehachse (8) senkrecht ist zur Längserstreckungsrichtung eines an der Befestigungsfläche (1a) befestigbaren/befestigten Rotorblattes, insbesondere die Drehachse (8) horizontal liegt.

3. Prüfvorrichtung nach einem der vorherigen Ansprüche, **dadurch gekennzeichnet, dass** sie eine Lagerplatte (2) aufweist, an der das Aufnahmeelement (1) drehbar gelagert ist, vorzugsweise nach Anspruch 2, Alternative a), insbesondere wobei auch die Lagerplatte (2) drehbar gelagert ist, vorzugsweise nach Anspruch 2, Alternative b).

4. Prüfvorrichtung nach Anspruch 3, **dadurch gekennzeichnet, dass** das Aufnahmeelement (1) als Kreisscheibe ausgebildet ist, die an ihrem radial außen liegenden Randbereich (1b, 1c) an mehreren Umfangspositionen mittels Lagereinheiten (3a, 3b), vorzugsweise die jeweils wenigstens ein Wälzlager aufweisen, in axialer und radialer Richtung an der Lagerplatte (2) gestützt ist, insbesondere wobei das Aufnahmeelement (1) an der Lagerplatte (2) drehfest befestigbar ist.

5. Prüfvorrichtung nach Anspruch 4, **dadurch gekennzeichnet, dass** das kreisscheibenförmige Aufnahmeelement (1) auf der Seite der Befestigungsfläche (1a) am radial außen liegenden Randbereich (1c), insbesondere nur am radial außen liegenden Randbereich (1c) in axialer Richtung an der Lagerplatte (2) gestützt ist und auf der von der Befestigungsfläche (1a) abgewandten und zur Lagerplatte (2) gewandten Rückseite über mehrere, vorzugsweise in einer Umfangsrichtung um die Drehachse (6) verteilt angeordnete Lagereinheiten (3c) axial an der Lagerplatte (2) gestützt ist, insbesondere die auf einem kleineren Radius angeordnet sind als die axial wirkenden Lagereinheiten (3b) an der Seite der Befestigungsfläche (1a).

6. Prüfvorrichtung nach Anspruch 4 oder 5, **dadurch gekennzeichnet, dass** das kreisscheibenförmige Aufnahmeelement (1) zwischen den in axialer Richtung stützenden Lagereinheiten (3b) an der Seite der Befestigungsfläche (1a) und den in axialer Richtung stützenden Lagereinheiten (3c) an der Rückseite über wenigstens einen Aktor (4), insbesondere über Aktoren (4) mit einer axialen Kraft beaufschlagbar ist.

7. Prüfvorrichtung nach Anspruch 6, **dadurch gekennzeichnet, dass** jede an der Rückseite des Aufnahmeelements (1) angeordnete und in axialer Richtung stützende Lagereinheit (3c) und/oder jede an der Seite der Befestigungsfläche (1a) angeordnete und in axialer Richtung stützende Lagereinheit (3a) einen Aktor (4), vorzugsweise einen hydraulisch betätigbaren Aktor (4) umfasst, mit dem wenigstens ein Lager (5), insbesondere Wälzlager, innerhalb der Lagereinheit (3b, 3c) in axialer Richtung der Drehachse (6) verschiebbar ist.

8. Prüfvorrichtung nach einem der vorherigen Ansprüche, **dadurch gekennzeichnet, dass** das Aufnahmeelement (1), insbesondere mittelbar über eine Lagerplatte (2) nach einem der vorherigen Ansprüche 3 bis 7, an einer Stützvorrichtung (9) befestigt ist, wobei die Stützvorrichtung (9) an einer Basis (7) befestigt ist.

9. Prüfvorrichtung nach Anspruch 8, **dadurch gekennzeichnet, dass** die Stützvorrichtung (9) mehrere mit Abstand parallel zueinander angeordnete und senkrecht zur Befestigungsfläche (1a) des Aufnahmeelementes (1) und/oder senkrecht zur Lagerplatte (2) orientierte Stützwände (9a) aufweist, vorzugsweise wobei benachbarte Stützwände (9a) miteinander über Verbindungsstreben (9b) verbunden sind, weiter bevorzugt wobei jede Stützwand (9a) aus mehreren Stützsäulen (9c) ausgebildet ist, insbesondere die untereinander, vorzugsweise über Flanschplatten (9d), verbunden sind, vorzugsweise wobei die von dem Aufnahmeelement (1) am weitesten beabstandeten Stützsäulen (9c) von oben nach unten im Querschnitt zunehmend ausgebildet sind.

10. Prüfvorrichtung nach einem der vorherigen Ansprüche 8 oder 9, **dadurch gekennzeichnet, dass** die Stützvorrichtung (9) an der Basis (7) um eine Drehachse (8) herum, insbesondere die senkrecht orientiert ist zur Normalen auf der Befestigungsfläche (1a), vorzugsweise die horizontal ist, beweglich, vorzugsweise verschieblich, gelagert ist, insbesondere mittels wenigstens eines, vorzugsweise hydraulischen Aktors (12), vorzugsweise wobei die Stützvorrichtung (9) mittels wenigstens eines Schlittens (10), vorzugsweise mittels mehreren Schlitten (10), auf/an wenigstens einem Schienenelement (11) der Basis (7) um eine Drehachse (8) herum verschieblich ist, vorzugsweise wobei jede Stützwand (9a) der Stützvorrichtung (9) an deren unteren Ende mit einem eigenen Schlitten (10) auf/an einem eigenen Schienenelement (11) verschieblich ist, insbesondere wobei das wenigstens eine Schienenelement (11) wenigstens eine kreisbogenförmig um die Drehachse (8) gekrümmte Führungsschiene (11a) aufweist, insbesondere wobei die Drehachse (8) senkrecht orientiert ist zur Normalen auf der Befestigungsfläche (1a).

11. Prüfvorrichtung nach Anspruch 10, **dadurch gekennzeichnet, dass** die Drehachse (8) in einem Abstand unter dem Schienenelement (11) liegt, insbesondere unter der Oberfläche der Basis (7) liegt, insbesondere in oder unter dem Fundament liegt, weiter bevorzugt die Stützvorrichtung (9) mit einem Radius (R) um die Drehachse (8) herum verschiebbar ist, der mehrere Meter beträgt, insbesondere der Radius (R) zwischen 10 Metern und 30 Metern, vorzugsweise zwischen 15 Metern und 25 Metern liegt.

12. Prüfvorrichtung nach einem der vorherigen Ansprüche 10 oder 11, **dadurch gekennzeichnet, dass** das Schienenelement (11) einen Schienenkörper (11c) aufweist, der auf zwei sich gegenüberliegenden Seiten jeweils eine um die Drehachse (8) gekrümmte Führungsschiene (11a) aufweist, vorzugsweise wobei jede Führungsschiene (11a) zwei in radialer Richtung zur Drehachse (8) beabstandete gekrümmte Laufflächen (11b) aufweist, zwischen denen jeweils Laufrollen (10d) der Schlitten (10) geführt sind.

13. Prüfvorrichtung nach einem der vorherigen Ansprüche 10 bis 12, **dadurch gekennzeichnet, dass** der Schlitten (10), insbesondere jeder Schlitten (10) jeweils an dessen in Verschieberichtung vorderen und hinteren Ende zwei sich gegenüberliegende, über die zum Schlitten (10) weisende Oberfläche des Schienenelementes (11) / Schienenkörpers (11c) hinausragende Laufrolleneinheiten (10c) aufweist, wobei jede Laufrolleneinheit (10c) wenigstens zwei Laufrollen (10d) aufweist, insbesondere die jeweils zwischen zwei gekrümmten Laufflächen (11d) einer Führungsschiene (11a) des Schienenelementes einliegen, vorzugsweise wobei wenigstens zwei Laufrollen (10d) unterschiedlichen radialen Abstand zur Drehachse (8) aufweisen, insbesondere wenigstens eine der Laufrollen (10d) in radialer Richtung zur Drehachse (8) justierbar ist.

14. Prüfvorrichtung nach einem der vorherigen Ansprüche 10 bis 13, **dadurch gekennzeichnet, dass** die zum Schlitten (10) weisende Oberfläche eines Schienenelementes, insbesondere die zum Schlitten weisende Oberfläche des Schienenkörpers (11c), mehrere in der Verschieberichtung nebeneinanderliegende Spannsegmente (11d) aufweist, insbesondere die in ihrer Nebeneinanderanordnung der Krümmung um die Drehachse (8) folgen, wobei am Schlitten (10) Spannblöcke (10b1, 10b2) vorgesehen sind und ein jeweiliger Spannblock (10b1, 10b2) mit einem Spannsegment (11d), form- und/oder kraftschlüssig und/oder reibschlüssig verbindbar ist.

15. Prüfvorrichtung nach Anspruch 14, **dadurch gekennzeichnet, dass** die Spannblöcke (10b1, 10b2)
a. erste Spannblöcke (10b1) umfassen, wobei ein jeweiliger erster Spannblock (10b1) in radialer Richtung in seiner Dicke variabel einstellbar ist, insbesondere durch senkrecht zur radialen Richtung relativ zueinander verschiebbare Keilplatten (10e), vorzugsweise ein jeweiliger erster Spannblock (10b1) in radialer Richtung von einer Spannschraube durchdrungen ist oder zumindest durchdringbar ist, die in ein Spannsegment (11d) einschraubbar ist, und/oder
b. zweite Spannblöcke (10b2) umfassen, wobei die zweiten Spannblöcke (10b2) mit den Spannsegmenten (11d) zusammenwirkend sind und zweite Spannblöcke (10b2) und die Spannsegmente (11d) jeweils Aktoren (13), insbesondere hydraulische Aktoren, insbesondere als Spannelemente (13) umfassen, mit denen ein in einen zweiten Spannblock (10b2) und in ein gegenüberliegende Spannplatte (11d) eingesetzter Passstift, vorzugsweise mit sich gegenüberliegenden planen Passflächen, formschlüssig klemmbar ist,
vorzugsweise wobei erste und zweite Spannblöcke (10b1, 10b2) in der Verschieberichtung abwechselnd am Schlitten (10) hintereinander angeordnet sind.
